# EUROPÄISCHE PATENTANMELDUNG

(11) **EP 2 410 304 A1**
(43) Veröffentlichungstag der Anmeldung: **25.01.2012**
(21) Anmeldenummer: 10170645.5
(22) Anmeldetag: 23.07.2010
(51) Int. Cl.: G01G 23/18, G01G 19/414

(54) **Wägevorrichtung mit verstellbarer Anzeigeeinheit**

(71) Anmelder: Mettler-Toledo (Albstadt) GmbH, 72458 Albstadt (DE)
(72) Erfinder: Kempf, Edgar, 72514, Inzigkofen (DE); Kontschak, Dieter, 72474, Winterlingen (DE); Holike, Walter, 72351, Geislingen (DE); Weber, Klaus, 72336, Balingen (DE)
(74) Vertreter: Mettler-Toledo

(57) **Zusammenfassung**

Wägevorrichtung mit einem Gehäuse (1), mit einer ersten Anzeigeeinheit (4) und mit einer zweiten Anzeigeeinheit (6), wobei die erste Anzeigeeinheit (4) mechanisch mit dem Gehäuse (1) verbunden ist. Die Wägevorrichtung weist ferner ein Verbindungsstück (7) mit zwei parallel zueinander ausgerichteten Schwenkachsen (A, A') auf, welche Schwenkachsen (A, A') senkrecht zur Lastrichtung der Wägevorrichtung ausgerichtet sind, wobei das Verbindungsstück (7) über eine der beiden Schwenkachsen (A') mit der ersten Anzeigeeinheit (4) und über die andere Schwenkachse (A) mit der zweiten Anzeigeeinheit verbunden ist, so dass der vertikale Abstand und/oder der Neigungswinkel der zweiten Anzeigeeinheit (6) unabhängig von der ersten Anzeigeeinheit (4) in Relation zum Gehäuse (1) einstellbar ist.

## Beschreibung

Die vorliegende Erfindung bezieht sich auf eine Wägevorrichtung mit mindestens einer verstellbaren Anzeigeeinheit, wobei die Wägevorrichtung zumindest zwei Anzeigeeinheiten aufweist.

Wägevorrichtungen mit mehreren Anzeigeeinheiten werden vor allem im Einzelhandel eingesetzt, um sowohl dem Bedienpersonal als auch dem Kunden Einblick auf das Wägeergebnis oder weitere nur für den Kunden oder das Bedienpersonal relevante Informationen zu gewähren.

Eine derartige Wägevorrichtung ist beispielsweise aus dem US 2003/0168260 A1 oder aus der DE 20 2005 011 576 U1 als Waagen-Kassen-Gerät bekannt. Nachteilig an den offenbarten Wägevorrichtungen ist, dass die Anzeigeeinheiten, insbesondere die Kundenanzeige, nur sehr beschränkt an die vor Ort herrschenden Gegebenheiten angepasst werden können. Die aus der US 2003/0168260 A1 bekannte Wägevorrichtung weist beispielsweise zwei Anzeigeeinheiten auf, die direkt aneinander befestigt sind und nur gemeinsam in der Höhe eingestellt werden können. Die DE 20 2005 011 579 U1 weist zwei am einem gemeinsamen Ständer befestigte untereinander angeordnete Anzeigeeinheiten auf, welche zwar in der Höhe verstellt werden können, aber nicht über eine breitere Theke vom Kunden problemlos eingesehen werden können. Somit ist zwar eine Anpassung für das Bedienpersonal oder für den Kunden möglich, jedoch nicht für beide Parteien.

Gerade im Einzelhandel weichen die ergonomischen Aufstellsituationen oft stark von einander ab, was eine möglichst flexible Anpassung von Wägevorrichtungen mit zwei oder mehr Anzeigeeinheiten erfordert. Verkaufstheken können sowohl Typen-bedingte als auch regionale Abweichung zum Beispiel in Bezug auf Ausgestaltung, Breite und Höhe aufweisen.

Trotzdem sollen die Anzeigeeinheiten einer Wägevorrichtung mit mindestens zwei Anzeigeeinheiten unabhängig von den herrschenden Aufstellbedingungen möglichst einfach und vor allem ergonomisch korrekt für das Bedienpersonal sowie auch den Kunden einstellbar sein. Weiterhin wäre es wünschenswert, wenn die weitere Anzeigeeinheit optimal an die bestehende Thekensituation angepasst werden kann, so dass der Kunde diese einfach einsehen kann. Wünschenswert wäre, wenn diese Anforderungen von einer Wägevorrichtung rasch und ohne grosse apparative Anpassung erfüllt würden.

Gelöst wird diese Aufgabe durch eine Wägevorrichtung mit einem Gehäuse, einer ersten Anzeigeeinheit und einer zweiten Anzeigeeinheit, wobei die erste Anzeigeeinheit mechanisch mit dem Gehäuse verbunden ist. Weiterhin weist die Wägevorrichtung ein Verbindungsstück mit zwei parallel zueinander ausgerichteten Schwenkachsen auf, welche senkrecht zur Lastrichtung der Wägevorrichtung ausgerichtet sind. Eine der beiden Schwenkachsen des Verbindungsstücks ist mit der ersten Anzeigeeinheit verbunden und die weitere Schwenkachse ist mit der zweiten Anzeigeeinheit verbunden, so dass der vertikale Abstand und/oder der Neigungswinkel der zweiten Anzeigeeinheit in Relation zum Gehäuse unabhängig von der ersten Anzeigeeinheit einstellbar sind.

Eine derartige Wägevorrichtung ermöglicht insbesondere die flexible Einstellung der zweiten Anzeigeeinheit, welche beispielsweise als Kundenanzeige dienen kann. Der vertikale Abstand und der Neigungswinkel der zweiten Anzeigeeinheit kann aufgrund der Kopplung über das Zwischenstück unabhängig von der ersten Anzeigeeinheit eingestellt werden, so dass die Wägevorrichtung einfach und insbesondere werkzeugfrei an verschiedene Thekensituationen angepasst werden kann.

In einer weiteren Ausgestaltung weist die Wägevorrichtung zwei oder mehr Verbindungsstücke auf.

Beispielsweise kann die erste Anzeigeeinheit über ein weiteres oder mehrere weitere Verbindungsstücke schwenkbar mit dem Gehäuse verbunden sein, so dass der vertikale Abstand und/oder der Neigungswinkel ersten und/oder zweiten Anzeigeeinheit unabhängig voneinander und in Relation zum Gehäuse einstellbar sind. Diese Ausgestaltung erlaubt die voneinander unabhängige Einstellung der Höhe und/oder der Neigungswinkel der ersten und/oder zweiten Anzeigeeinheit, so dass die Wägevorrichtung sowohl an eine vorhandene Theke, als auch an die Bedürfnisse von Kunden und Bedienpersonal optimal angepasst werden kann. Werden mehrere Verbindungsstücke hintereinander eingesetzt, so sind immer zwei Verbindungsstücke über eine gemeinsame Schwenkachse miteinander verbunden, so dass die erste Anzeigeeinheit zudem in Relation zum Gehäuse auch horizontal verschoben oder verschwenkt werden kann.

In einer weiteren Ausgestaltung können zwei oder mehr Verbindungsstücke die ersten und zweite Anzeigeeinheit schwenkbar miteinander verbinden, wobei zwei benachbarte Verbindungsstücke jeweils über eine gemeinsame Schwenkachse verbunden sind. Dadurch ergibt sich eine weitere Einstellmöglichkeit für die zweite Anzeigeeinheit, welche dadurch zusätzlich in horizontaler Richtung verstellt werden kann. Die horizontale Verstellung ist bereits mit einem Verbindungsstück, allerdings nur in sehr beschränktem Masse, möglich. Durch die Verwendung mehrere Verbindungsstücke kann auch eine breitere Theke überbrückt werden und so dem Kunde die zweite Anzeigeeinheit in Sichthöhe präsentiert werden.

Die flexible Einstellung der ersten und/oder der zweiten Anzeigeeinheit wird insbesondere durch die Ausgestaltung des Zwischenstücks ermöglicht. Dieses umfasst mindestens zwei parallel zueinander angeordnete rohrförmige Lagerbolzen als Schwenkachsen und mindestens ein Zwischenstück, welches die Lagerbolzen miteinander verbindet.

Dieses Zwischenstück kann aus einem oder mehreren Teilen bestehen, welche die zu den Lagebolzen zugehörigen Lagerhülsen ausbilden.

In einer weiteren Ausgestaltung können das Zwischenstück und die rohrförmigen Lagerbolzen im Wesentlichen einteilig ausgestaltet sein.

In einer weiteren Ausgestaltung kann das Verbindungsstück zwei hohle Halbschalen umfassen, welche miteinander verbunden werden können und im verbundenen Zustand die Lagerbolzen und das Zwischenstück bilden. Die Verbindung kann sowohl lösbar sein und durch geeignete Befestigungsmittel, wie beispielsweise Schrauben, hergestellt werden, als auch stoffschlüssig sein und in Abhängigkeit des eingesetzten Werkstoffs durch Temperatur- oder Druckeinwirkung hergestellt werden. Geeignete Verfahren umfassen unter anderem Schweissen, Verpressen oder Kleben. Diese Halbschalen können beispielsweise durch bekannte Gussverfahren, Spritzgussverfahren, Druckgussverfahren oder Blechumformung hergestellt werden und aus einem Werkstoff wie Kunststoff, Metall oder Metallverbindungen, wie beispielsweise Aluminium-, Messing- oder Zink-Druckguss oder vergleichbare Materialien oder Mischungen daraus aufweisen. Auf diese Weise ist es möglich, die Stabilität sowie auch die Masse bzw. das Gewicht der Verbindungsstücke anzupassen.

Die Wägevorrichtung kann mindestens ein Verbindungskabel zum Anschluss der ersten und/oder zweiten Anzeigeeinheit aufweisen. Aufgrund der Ausgestaltung des Verbindungsstücks und insbesondere der Lagerbolzen, kann das Verbindungskabel innerhalb der Lagerbolzen geführt werden. Dieses ist sehr vorteilhaft, da die Verbindungskabel so gegen äussere Einwirkungen geschützt sind und beispielsweise nicht versehentlich abgerissen oder entfernt werden können. Die rohrförmigen Lagerbolzen sind vorzugsweise hohl und können daher eine einfache und sichere Kabelführung gewährleisten.

Zur besonders einfachen Einstellung oder Verstellung der ersten und/oder zweiten Anzeigeeinheit kann die Wägevorrichtung ein Verstellelement für mindestens eine der Schwenkachse aufweisen. Das Verstellelement kann beispielsweise als Verstellrad oder Verstellhebel ausgebildet sein. Durch das einfache Verstellen der ersten und/oder zweiten Anzeigeeinheit kann auch die Reinigung der Wägevorrichtung erleichtert werden. Das Verstellelement kann zur stufenlosen Verstellung ausgestaltet sein oder ein Raster umfassen, welches eine abgestufte Verstellung der ersten und/oder zweiten Anzeigeeinheit ermöglicht.

Eine weitere Ausführung kann ein selbsthemmendes System umfassen, welches beispielsweise manuell, als nur durch Muskelkraft, verstellt werden kann.

Weiterhin kann die Wägevorrichtung ein Feststellelement zum Feststellen der Anzeigeeinheit in einer gewünschten Position für mindestens eine der Schwenkachse aufweisen. Das Feststellelement kann ein Federelement, insbesondere eine flache Blattfeder sein, welche am rohrförmigen Lagerbolzen oder an einem entsprechenden Gegenstück an der ersten oder zweiten Anzeigeeinheit angeordnet ist. Das Feststellelement dient dazu, die Bewegung der ersten und/oder zweiten Anzeigeeinheit zu kontrollieren und gegebenenfalls zu verlangsamen, um eine Fehlbedienung bei der Einstellung zu vermeiden. Zudem bremst das Feststellelement die Geschwindigkeit, mit der die Einstellung erfolgen kann, und kann die erste und/oder zweite Anzeigeeinheit in der gewählten Position aufgrund seiner Federkraft halten bzw. feststellen.

Weiterhin kann die Wägevorrichtung ein Sicherungselement zur Fixierung der Position der ersten oder zweiten Anzeigeeinheit für mindestens eine der Schwenkachse aufweisen. Das Sicherungselement kann beispielsweise ein Schraub-, Klemm- oder Schraub-Klemm-Mittel sein. Dadurch kann nach einer ersten Einstellung die Wägevorrichtung insbesondere die Position der ersten und/oder zweiten Anzeigeeinheit fixiert werden bzw. fest und unveränderlich eingestellt werden, so dass diese nicht versehentlich durch den Kunden oder das Bedienpersonal geändert werden kann.

Die Wägevorrichtung weist ein Gehäuse auf, welches ein Basisgehäuse mit einer Wägezelle und mindestens ein säulenartiges Gehäuse umfasst. Das säulenartige Gehäuse kann mit dem Basisgehäuse verbunden und senkrecht zu diesem angeordnet sein, wobei die erste Anzeigeeinheit vorzugsweise am freien Ende des säulenartigen Gehäuses angeordnet ist. Im säulenartigen Gehäuse, welches im Folgenden auch als Stativ bezeichnet wird, kann beispielsweise ein Drucker und/oder ein Teil der Elektronik der Wägevorrichtung angeordnet sein.

Die erste und/oder zweite Anzeigeeinheit kann eine Anzeige- und Bedieneinheit sein, welche sowohl eine Anzeige als auch eine Eingabemöglichkeit umfasst. Mögliche Ausgestaltungen umfassen ein Display, einen Touchscreen, eine Tastatur oder beliebige Kombinationen dieser Elemente.

In einer weiteren Ausgestaltung kann die Wägevorrichtung mehrere erste und/oder zweite Anzeigeeinheiten aufweisen, dieses ist vorteilhaft, wenn die erste und/oder zweite Anzeigeeinheit mehrere Anzeigen oder eine Anzeige sowie eine Eingabemöglichkeit aufweist.

In weiteren Ausgestaltungen kann das Verbindungsstück zumindest einseitig ein Kugelgelenk aufweisen oder alternativ die erste und/oder zweite Anzeigeeinheit mit einem Dreh- oder Kugelgelenk ausgestaltet sein, so dass die Anzeigeeinheit in allen drei Raumrichtungen bewegt werden kann, soweit es die Beweglichkeit des Verbindungsstücks erlaubt.

Selbstverständlich kann die Aufhängung des Verbindungsstücks an der Anzeigeeinheit an verschiedenen Positionen erfolgen.

Ein weiterer Aspekt dieser Erfindung betrifft ein Verbindungsstück zur Verwendung in einer Wägevorrichtung mit einem Gehäuse, einer ersten Anzeigeeinheit und einer zweiten Anzeigeeinheit, wobei die erste Anzeigeeinheit mechanisch mit dem Gehäuse verbunden ist. Das Verbindungsstück weist zwei parallel zueinander ausgerichtete Schwenkachsen auf und verbindet die erste mit der zweiten Anzeigeeinheit, so dass der vertikale Abstand und/oder der Neigungswinkel der zweiten Anzeigeeinheit in Relation zum Gehäuse einstellbar sind.

Verschiedene Aspekte der Ausgestaltung des Verbindungsstücks wurden bereits bei der Diskussion der Wägevorrichtung beschrieben und umfassen unter anderem, dass das Verbindungsstück mindestens zwei parallel zueinander angeordnete rohrförmige Lagerbolzen als Schwenkachsen und mindestens ein Zwischenstück aufweist, wobei das Zwischenstück die Lagerbolzen miteinander verbindet.

Das Verbindungsstück kann ein Verstellelement, ein Feststellelement und/oder ein Sicherungselement für mindestens eine der Schwenkachse aufweist. Verschiedene Ausführungen dieser Elemente sind weiter oben angegeben.

Verschiedene Ausführungen einer erfindungsgemässen Wägevorrichtung sowie eines Verbindungsstücks für eine derartige Wägevorrichtung werden anhand der folgenden Figuren näher beschrieben, wobei gleiche Elemente mit denselben Bezugszeichen versehen sind. Es zeigen:
- Fig. 1: Eine schematische Seitenansicht einer Wägevorrichtung mit einer ersten und zweite Anzeigeeinheit, wobei die zweite Anzeigeeinheit über ein Verbindungsstück mit der ersten Anzeigeeinheit verbunden ist;
- Fig. 2: eine dreidimensionale Teildarstellung der Wägevorrichtung gemäss Figur 1 mit einem Verstellelement in Form eines Verstellrads;
- Fig. 3: eine schematische Seitenansicht einer weiteren Wägevorrichtung mit einer ersten und zweite Anzeigeeinheit, wobei die zweite Anzeigeeinheit über ein Verbindungsstück mit der ersten Anzeigeeinheit verbunden ist und die erste Anzeigeeinheit über ein weiteres Verbindungsstück mit einem Gehäuse der Wägevorrichtung verbunden ist;
- Fig. 4: eine stark schematisierte Darstellung einer weiteren Wägevorrichtung;
- Fig. 5: eine stark schematisierte Darstellung einer weiteren Wägevorrichtung mit einem Verstellhebel als Verstellelement;
- Fig. 6: eine stark schematisierte Darstellung einer weiteren Wägevorrichtung mit zwei oder mehr Verbindungsstücken;
- Fig. 7: eine stark schematisierte Darstellung einer weiteren Wägevorrichtung mit zwei oder mehr Verbindungsstücken;
- Fig. 8: eine stark schematisierte Darstellung einer weiteren Wägevorrichtung mit mehreren Verbindungsstücken;
- Fig. 9: eine dreidimensionale Darstellung eines Verbindungsstücks;
- Fig. 10: eine Seitenansicht eines zweiteiligen Verbindungsstücks;
- Fig. 11: eine dreidimensionale Darstellung eines weiteren Verbindungsstücks;
- Fig. 12: eine Seitenansicht eines weiteren Verbindungsstücks;
- Fig. 13: eine Seitenansicht eines weiteren Verbindungsstücks;
- Fig. 14: ein Schnitt durch eine Verbindung zwischen einem Verbindungsstück und einer Anzeigeeinheit mit einem Feststellelement und einem Sicherungselement;
- Fig. 15: ein Schnitt durch eine Verbindung zwischen einem Verbindungsstück und einer Anzeigeeinheit mit einem weiteren Feststellelement und einem weiteren Sicherungselement.

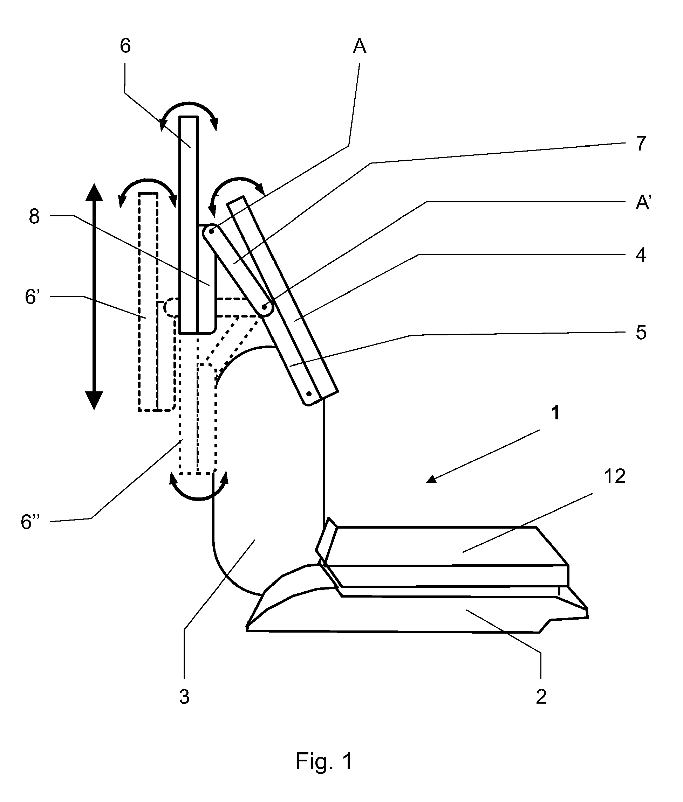

Figur 1 zeigt eine Wägevorrichtung mit einem Gehäuse 1, welches ein Basisgehäuse 2, in welchem eine Wägezelle angeordnet ist, und ein säulenartiges Gehäuse oder Stativ 3 aufweist. Das Basisgehäuse 2 weist eine Auflagefläche 12 für eine Wägegut auf. Im Stativ 3 kann beispielsweise ein Teil der Wägeelektronik oder ein Drucker angeordnet sein. Am freien Ende des Stativ 3 ist eine erste Anzeigeeinheit 4 angeordnet. Derartige Wägevorrichtungen sind prinzipiell als Ladenwaagen bekannt und können zusätzlich auch noch mit einer Kassenfunktion oder Kassenschublade ausgerüstet sein. Auf die verschiedenen Varianten von Ladenwaagen wird hier nicht näher eingegangen, da diese im Wesentlichen bekannt sind.

Die erste Anzeigeeinheit 4 ist über ein erstes Befestigungselement 5 drehbar am Stativ 3 befestigt, so dass der Neigungswinkel der ersten Anzeigeeinheit 4 in Relation zum Gehäuse 1 eingestellt werden kann.

Weiterhin weist die Wägevorrichtung eine zweite Anzeigeeinheit 6 auf. An der Rückseite der zweiten Anzeigeeinheit 6 ist ein weiteres Befestigungselement 8 befestigt. Die zweite Anzeigeeinheit 6 ist über ein Verbindungsstück 7 schwenkbar mit der ersten Anzeigeeinheit 4 verbunden, so dass sowohl die Höhe als auch der Neigungswinkel der zweiten Anzeigeeinheit 6 unabhängig von der ersten Anzeigeeinheit 4 und in Relation zum Gehäuse 1 eingestellt werden kann, wie es anhand der mit unterbrochener Linie eingezeichneten Positionen der zweiten Anzeigeeinheit 6', 6" angedeutet ist. Die ersten und zweite Anzeigeeinheit 4, 6 sind jeweils über eine der beiden Schwenkachsen A, A' mit dem Verbindungsstück 7 verbunden.

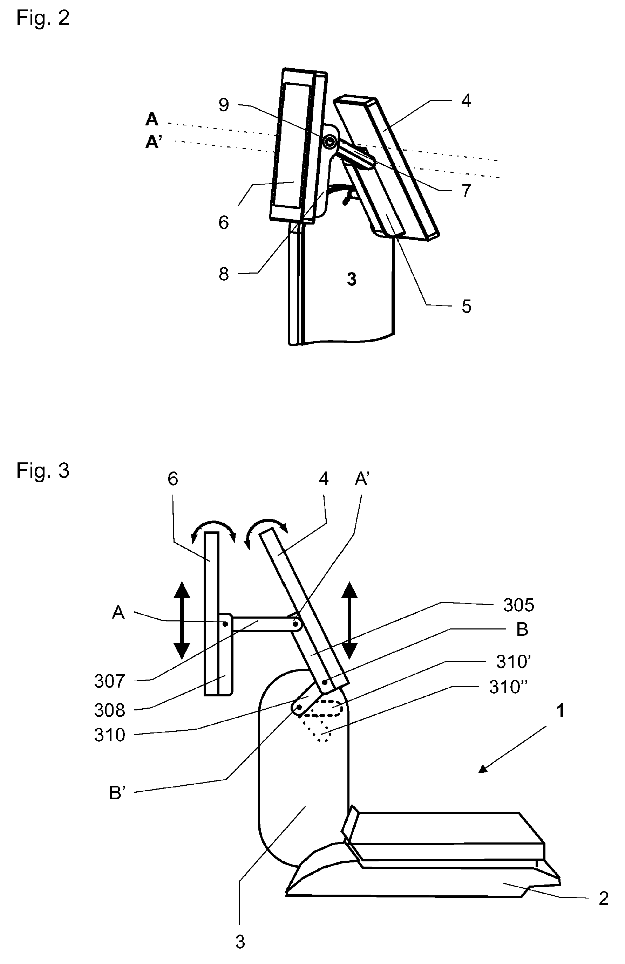

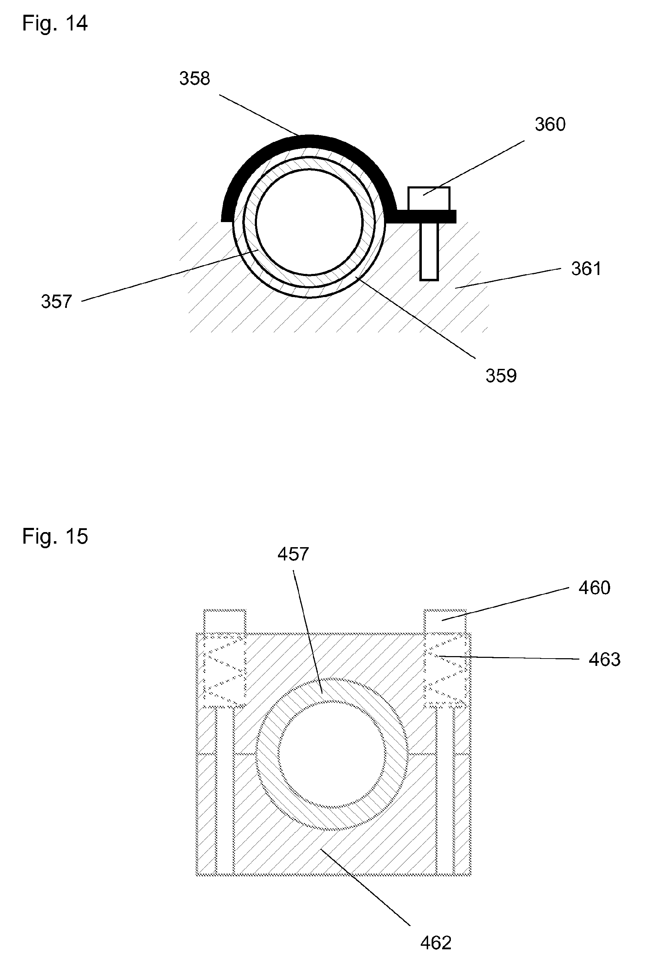

Figur 2 zeigt eine dreidimensionale Teildarstellung der Wägevorrichtung aus Figur 1. Hier sind vor allem die Anordnung des Verbindungsstücks 7 zwischen den beiden Anzeigeeinheiten 4, 6 sowie die beiden parallel angeordneten Schwenkachsen A, A' des Verbindungsstücks 7 zu erkennen, welche auch in Figur 1 gezeigt sind. Das Verbindungsstück 7 greift in die Befestigungselemente 5, 8 der beiden Anzeigeeinheiten 4, 6 ein und weist zudem am Befestigungselement 8 ein Verstellrad 9 auf, mit welchem die Position der Anzeigeeinheit 6 einfach verändert werden kann. Neben der hier gezeigten Ausführung mit dem Verstellrad 9, kann die Wägevorrichtung auch mit einem selbsthemmenden System, wie es beispielsweise in den Figuren 14 und 15 gezeigt ist, ausgestattet sein und manuell verstellt werden.

Figur 3 zeigt eine weitere Wägevorrichtung mit einem Gehäuse 1, welches ein Basisgehäuse 2 und ein Stativ 3 sowie eine erste und eine zweite Anzeigeeinheit 4, 6 aufweist. Die zweite Anzeigeeinheit 6 ist wiederum über ein Verbindungsstück 307, genauer über dessen Schwenkachsen A, A', schwenkbar mit der ersten Anzeigeeinheit 4 verbunden. Weiterhin ist die erste Anzeigeeinheit 4 über ein weiteres Verbindungsstück 310, genauer dessen parallel angeordnete Schwenkachsen B, B', mit dem Stativ 3 verbunden und kann somit unabhängig von der zweiten Anzeigeeinheit sowohl in der Höhe als auch im Neigungswinkel verstellt werden, wie es durch die mit gebrochener Linie gezeichneten Verbindungsstücke 310', 310" angedeutet wird.

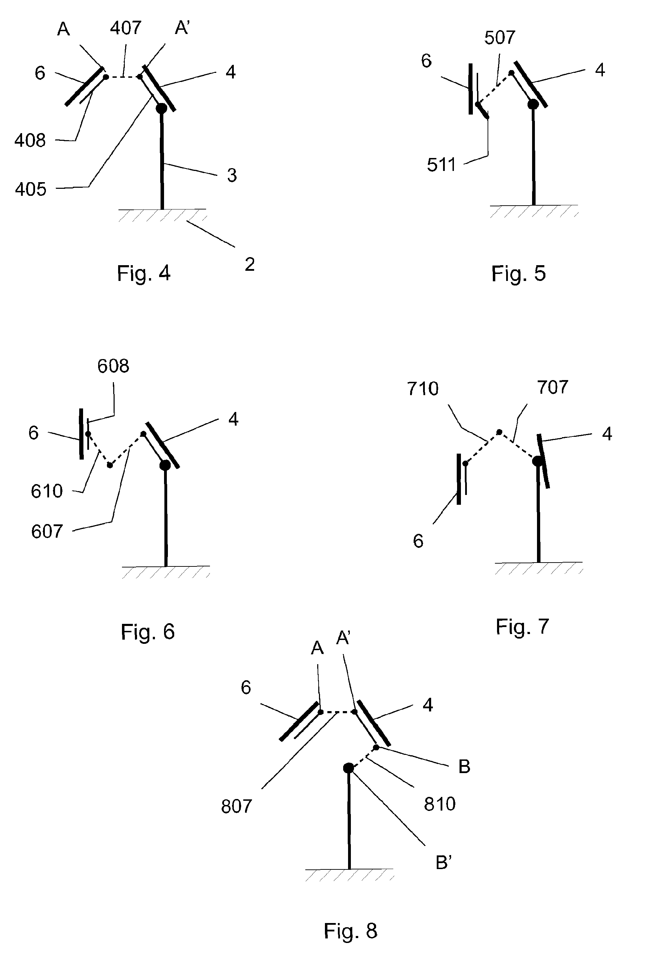

Die Figuren 4 bis 8 zeigen stark schematisierte Darstellungen verschiedener Ausführungen einer erfindungsgemässen Wägevorrichtung. Die Verbindungsstücke sind in diesen Figuren mit gebrochenen Linien eingezeichnet, um dieses hervorzuheben.

Die in Figur 4 gezeigte Wägevorrichtung entspricht im Wesentlichen der bereits in Figur 1 gezeigten, allerdings ist sind hier das Verbindungsstück 407 mit den Befestigungselementen 405, 408 jeweils am in Bezug auf die entsprechende Anzeigeeinheit 4, 6 oberen Ende des Befestigungselements verbunden.

Figur 5 zeigt eine weitere Ausgestaltung der in den vorangehenden Figuren beschriebenen Wägevorrichtung, wobei hier das untere Ende des Befestigungselements 508 mit dem Verbindungsstück 507 verbunden ist. Weiterhin ist an der Schwenkachse A ein Verstellhebel 511 als Verstellelement angebracht, mit dem die Position der zweiten Anzeigeeinheit 6 unabhängig von der ersten Anzeigeeinheit 4 einfach verändert werden kann.

Figur 6 zeigt ein weiteres Ausführungsbeispiel der Wägevorrichtung mit mehreren Verbindungsstücken 607, 610 zwischen der ersten und zweiten Anzeigeeinheit 4, 6, hier sind zwei Verbindungsstücke gezeigt. Diese Ausführung ermöglicht zusätzlich die horizontale Verschiebung der zweiten Anzeigeeinheit 6, da die beiden Verbindungsstücke 607, 610 wie eine Ziehharmonika auseinander gezogen oder zusammen geschoben werden können. Das Befestigungselement 608 der zweiten Anzeigeeinheit 6 ist hier im Wesentlich mittig mit dem Verbindungsstück 610 verbunden.

Eine weitere Möglichkeit zur Befestigung der ersten Anzeigeeinheit 4 wird in Figur 7 gezeigt, wo diese ohne Befestigungselement direkt schwenkbar am Stativ 3 befestigt ist. Die erste Anzeigeeinheit 4 ist mit der zweiten 6 wiederum über mehrere Verbindungsstücke 707, 710 verbunden.

Figur 8 zeigt eine Wägevorrichtung, welche im Wesentlichen der bereits in Figur 3 gezeigten entspricht und bei der die erste Anzeigeeinheit 4 sowohl mit dem Stativ 3, als auch mit der zweiten Anzeigeeinheit 6 über je ein Verbindungsstück 807, 810 verbunden ist, so dass die beiden Anzeigeeinheiten 4, 6 unabhängig voneinander in Relation zum Gehäuse eingestellt werden können. Selbstverständlich könnte die erste Anzeigeeinheit 4 auch über zwei oder mehr Verbindungsstücke 810 mit dem Stativ 3 verbunden sein.

Die Figuren 4 bis 8 zeigen somit unterschiedliche Ausgestaltungen einer erfindungsgemässen Wägevorrichtung mit einem oder mehreren Verbindungsstücken, wobei die Anordnung der Verbindungsstücke sowie auch die Verbindungsstellen zwischen den Verbindungsstücken oder dem Gehäuse und der ersten und/oder zweiten Anzeigeeinheit unterschiedlich ausgestaltet sein können. So ist es beispielsweise möglich, die Anzeigeeinheiten in Bezug auf ihren Mittelpunkt an verschiedenen Positionen zu befestigen.

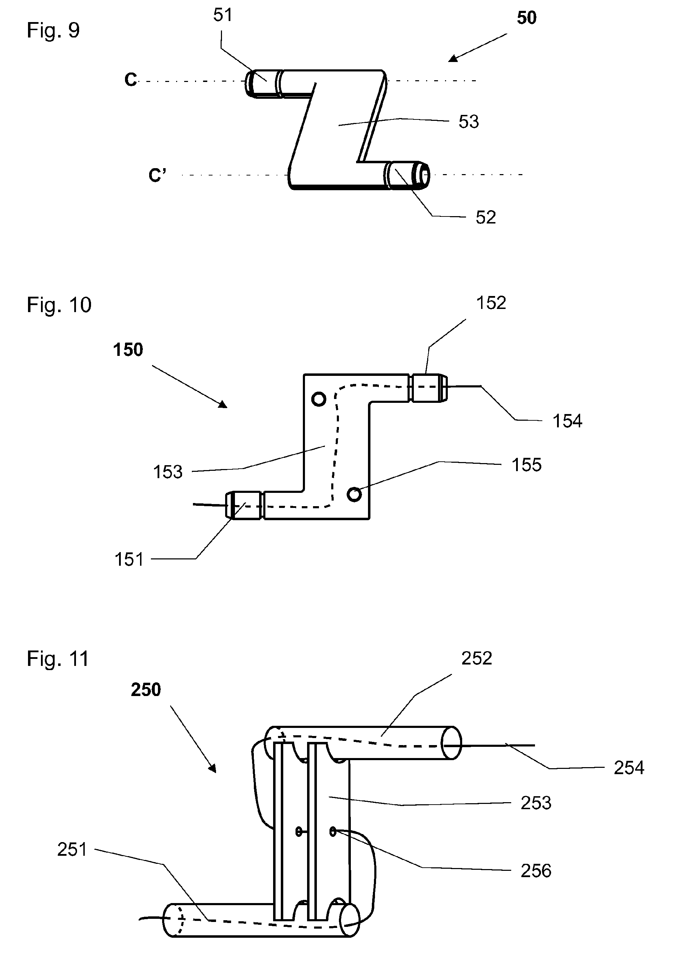

Mehrere Ausführungsbeispiele eines erfindungsgemässen Verbindungsstücks werden im Folgenden anhand der Figuren 9 bis 15 beschrieben.

Figur 9 zeigt eine dreidimensionale Darstellung eines Verbindungsstücks 50, welches im Wesentlichen Z-förmig ausgebildet ist. Das hier gezeigte Verbindungsstück 50 ist einteilig ausgestaltet und umfasst zwei rohrförmige Lagerbolzen 51, 52, welche die parallel zueinander ausgerichteten Schwenkachsen C, C' definieren und ein die Lagerbolzen 51, 52 verbindendes Zwischenstück 53. Das Verbindungsstück 50 kann aus verschiedenen Werkstoffen gefertigt werden und kann im Inneren hohl, teil- oder ganz verfüllt oder sogar monolithisch ausgebildet sein.

Die Lagerbolzen 51, 52 sind derart ausgestaltet, dass sie in die in den vorangehenden Figuren beschriebenen Befestigungselementen der Anzeigeeinheiten eingreifen bzw. zusammenwirken können.

Figur 10 zeigt ein zweiteiliges Verbindungsstück 150, welches aus mindestens zwei zusammengesetzten Hohlschalen besteht, welche entlang den Schwenkachsen getrennt werden können. Die beiden Hohlschalen werden, wie hier angedeutet über geeignete Befestigungsmittel 155, wie beispielsweise Schrauben, lösbar miteinander verbunden. Selbstverständlich könnten diese beiden Hohlschalen auch miteinander verklebt, verschweisst oder auf andere Art stoffschlüssig miteinander verbunden werden. Die lösbare Verbindung ist vorteilhaft, da so das Innere des Verbindungsstücks 150 besonders einfach als Kabelkanal verwendet werden kann und ein Verbindungskabel 154 oder Anschlusskabel für zumindest eine der beiden Anzeigeeinheiten durch das Verbindungsstück 150 geführt werden kann.

Figur 11 zeigt eine weitere Ausführungsform des Verbindungsstücks 250 mit zwei Lagerbolzen 251, 252, welche hier als hohle Rohrstücke ausgebildet sind, die durch zwei Zwischenstücke 253 verbunden werden. Die Enden der Zwischenstücke 253 sind, wie hier gezeigt als Lager für die Lagerbolzen 251, 252 ausgebildet. Die hohlen Lagerbolzen 251, 252 können wiederum als Kabelführung verwendet werden, wobei ein Verbindungskabel 254 beispielsweise wie hier gezeigt durch Löcher 256 oder andere geeignete Aussparungen in den Zwischenstücken oder an diesen vorbei geführt werden kann. Ein derartiges Verbindungsstück 250 könnte beispielsweise in einem geeignete Gehäuse angeordnet sein oder die Zwischenstücke 253 könnten die Lagerbolzen 251, 252 umschliessen.

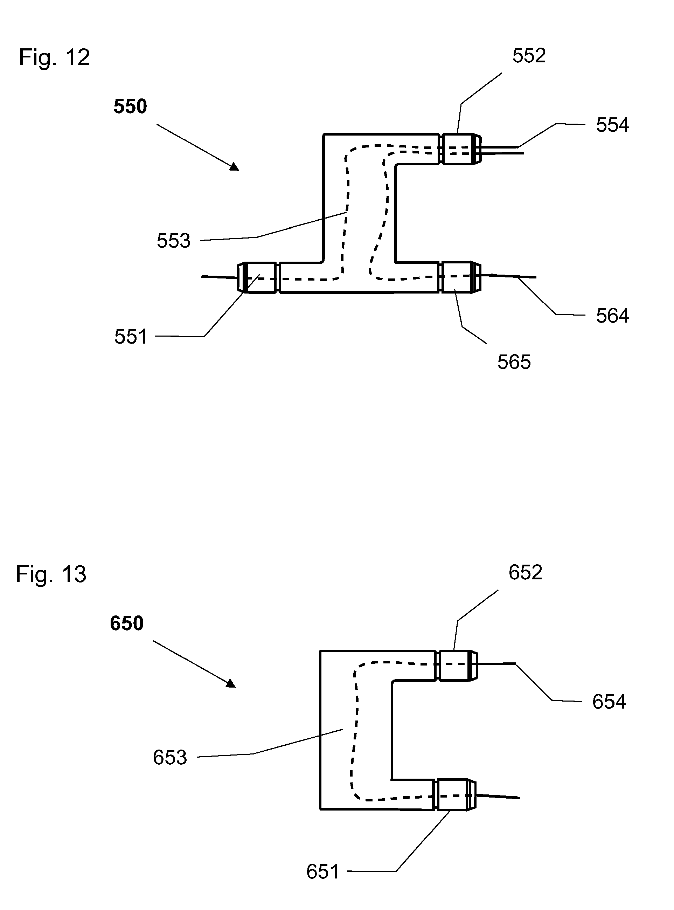

Figur 12 zeigt eine weitere Ausgestaltung eines Verbindungsstücks 550, welches wie hier gezeigt im Wesentlichen T- oder Doppel-T-förmig ausgestaltet ist. Im Gegensatz zu dem in den Figuren 9 bis 10 gezeigten Verbindungsstücken weist das Verbindungsstück 550 drei Lagerbolzen 551, 552, 565 auf, welche wiederum zwei Schwenkachsen definieren. Die drei Lagerbolzen 551, 552, 565 sind durch ein Zwischenstück 553 verbunden. Im Inneren des Verbindungsstücks 550 können, wie hier gezeigt mehrere Verbindungskabel 554, 564 geführt werden, wobei hier nur ein Beispiel für eine mögliche Kabelführung gezeigt ist. Mittels diesem Verbindungsstück 550 können zwei oder drei Elemente, wie ein Gehäuse, eine erste, zweite oder dritte Anzeigeeinheit, über zwei Schwenkachsen miteinander verbunden werden.
Selbstverständlich wäre auch eine reine T-förmige Ausgestaltung mit nur zwei Lagerbolzen 551, 565 denkbar, für die Verbindung von zwei Elementen. Weiterhin kann das in Figur 12 gezeigte Verbindungsstück 550 auch ein zweiteiliges Zwischenstück aufweisen, wie es beispielsweise in Figur 11 gezeigt ist, wobei das zweiteilige Zwischenstück vorzugsweise so angeordnet ist, das ein Teil die Lagerbolzen 551, 552 und das andere die Lagerbolzen 552, 565 miteinander verbindet, so dass die beiden Lagerbolzen 551, 556 unabhängig voneinander verschwenkt werden können.

Figur 13 zeigt eine weitere Ausgestaltung eines Verbindungsstücks 650, welches im Wesentlichen U-förmig ausgestaltet ist. Das Verbindungsstück 650 weist zwei Lagerbolzen 651, 652 auf, die über ein Zwischenstück 653 miteinander verbunden sind. Im Inneren des Verbindungsstücks kann, wie hier angedeutet, ein Verbindungskabel 654 geführt werden.

Figur 14 zeigt einen Schnitt durch die Verbindung zwischen einem Verbindungsstück und einem Befestigungselement 361, wobei ein Lagerbolzen 357 von aussen durch eine Blattfeder 358 als Feststellelement festgestellt werden kann. Zwischen der Blattfeder 358 und dem Lagerbolzen 357 ist zusätzlich eine Gleithülse 359, beispielsweise eine geschlitzte Kunststoffhülse, angeordnet. Die Blattfeder 358 kann von aussen über die Gleithülse 359 auf den Lagerbolzen 357 einwirken und so dessen Bewegungsfreiheit, insbesondere die Drehbarkeit um die Schwenkachse, hemmen. Zur Sicherung kann die Blattfeder 358 mit einem Befestigungsmittel 360 am Befestigungselement 361 befestigt werden und so eine eingestellte Position der Anzeigeinrichtung bzw. der Schwenkachse fixiert werden.

Eine weitere Ausgestaltung der Schwenkachsenführung ist in Figur 15 gezeigt. Hier wird ein Lagerbolzen 457, in einem zweiteiligen Gleitteil 462 geführt. Die beiden Elemente des Gleitteils 462 sind über eine Federklemmung 463 als Feststellelement verbunden. Die Position des Lagerbolzens 457 in Relation zur Schwenkachse kann wiederum mittels eines Befestigungsmittels 460 fixiert werden. Die in den Figur 14 und 13 gezeigten Befestigungsmittel 360, 460 können entweder manuell oder mit einem geeigneten Hilfsmittel gelöst werden.

Obwohl die Erfindung durch die Darstellung spezifischer Ausführungsbeispiele beschrieben worden ist, ist es offensichtlich, dass zahlreiche weitere Ausführungsvarianten in Kenntnis der vorliegenden Erfindung geschaffen werden können, beispielsweise indem die Merkmale der einzelnen Ausführungsbeispiele miteinander kombiniert und/oder einzelne Funktionseinheiten der Ausführungsbeispiele ausgetauscht werden.

### Bezugszeichenliste

- 1: Gehäuse
- 2: Basisgehäuse
- 3: Säulenartiges Gehäuse / Stativ
- 4: erste Anzeigeeinheit
- 5, 305, 405: Befestigungselement
- 6, 6', 6": zweite Anzeigeeinheit
- 7, 307, 407, 507, 607, 707, 807: Verbindungsstück
- 8, 308, 408, 608: Befestigungselement
- 9: Verstellrad
- 310, 310', 310", 610, 710, 810: Verbindungsstück
- 511: Verstellhebel
- 12: Auflagefläche
- 50, 150, 250, 550, 650: Verbindungsstück
- 51, 151, 251, 551, 651: Lagerbolzen
- 52, 152, 252, 552, 652: Lagerbolzen
- 53, 153, 253, 553, 653: Zwischenstück
- 154, 254, 554, 654: Verbindungskabel
- 155: Befestigungsmittel
- 256: Aussparung / Loch
- 357, 457: Lagerbolzen
- 358: Blattfeder
- 359: Gleithülse
- 360, 460: Sicherungselement
- 361: Befestigungselement
- 462: Gleitteil
- 463: Federklemmung
- 564: Verbindungskabel
- 565: Lagerbolzen
- A, A'; B, B'; C, C': Schwenkachse

## Patentansprüche

1. Wägevorrichtung mit einem Gehäuse (1), mit einer ersten Anzeigeeinheit (4) und mit einer zweiten Anzeigeeinheit (6), wobei die erste Anzeigeeinheit (4) mechanisch mit dem Gehäuse (1) verbunden ist, **dadurch gekennzeichnet, dass** die Wägevorrichtung ferner ein Verbindungsstück (7) mit zwei parallel zueinander ausgerichteten Schwenkachsen (A, A') aufweist, welche Schwenkachsen (A, A') senkrecht zur Lastrichtung der Wägevorrichtung ausgerichtet sind, wobei das Verbindungsstück (7) über eine der beiden Schwenkachsen (A') mit der ersten Anzeigeeinheit (4) und über die andere Schwenkachse (A) mit der zweiten Anzeigeeinheit verbunden ist, so dass der vertikale Abstand und/oder der Neigungswinkel der zweiten Anzeigeeinheit (6) unabhängig von der ersten Anzeigeeinheit (4) in Relation zum Gehäuse (1) einstellbar ist.

2. Wägevorrichtung nach Anspruch 1, **dadurch gekennzeichnet, dass** die Wägevorrichtung zwei oder mehr Verbindungsstücke (307, 310) aufweist.

3. Wägevorrichtung nach Anspruch 2, **dadurch gekennzeichnet, dass** die erste Anzeigeeinheit (4) über ein weiteres oder mehrere weitere Verbindungsstücke (310) schwenkbar mit dem Gehäuse verbunden ist.

4. Wägevorrichtung nach Anspruch 2 oder 3, **dadurch gekennzeichnet, dass** zwei oder mehr Verbindungsstücke (607, 610) die erste Anzeigeeinheit (4) mit der zweiten Anzeigeeinheit (6) schwenkbar verbinden, wobei benachbarte Verbindungsstücke jeweils über eine ihrer Schwenkachsen miteinander verbunden sind.

5. Wägevorrichtung nach einem der Ansprüche 1 bis 4, **dadurch gekennzeichnet, dass** das Verbindungsstück (50) mindestens zwei parallel zueinander angeordnete rohrförmige Lagerbolzen (51, 52) als Schwenkachsen und mindestens ein Zwischenstück (53) aufweist, welches die Lagerbolzen (51, 52) miteinander verbindet.

6. Wägevorrichtung nach Anspruch 5, **dadurch gekennzeichnet, dass** diese ferner mindestens ein Verbindungskabel (154) zum Anschluss der ersten und/oder zweiten Anzeigeeinheit aufweist, welches Verbindungskabel (154) innerhalb der Lagerbolzen (151, 152) geführt ist.

7. Wägevorrichtung nach einem der Ansprüche 1 bis 6, **dadurch gekennzeichnet, dass** diese ein Verstellelement (9, 511) zum verschwenken der erste und/oder zweiten Anzeigeeinheit für mindestens eine der Schwenkachsen aufweist.

8. Wägevorrichtung nach einem der Ansprüche 1 bis 7, **dadurch gekennzeichnet, dass** diese ein Feststellelement (358, 463) zum Feststellen der ersten oder zweiten Anzeigeeinheit in einer gewünschter Position für mindestens eine der Schwenkachsen aufweist.

9. Wägevorrichtung nach einem der Ansprüche 1 bis 8, **dadurch gekennzeichnet, dass** diese ein Sicherungselement (360, 460) zur Fixierung der Position der ersten oder zweiten Anzeigeeinheit für mindestens eine der Schwenkachsen aufweist.

10. Wägevorrichtung nach einem der Ansprüche 1 bis 9, **dadurch gekennzeichnet, dass** das Gehäuse (1) ein Basisgehäuse (2) mit einer Wägezelle und mindestens ein säulenartiges Gehäuse (3) umfasst, wobei das säulenartige Gehäuse (3) mit dem Basisgehäuse (2) verbunden und senkrecht zu diesem angeordnet ist, und wobei die erste Anzeigeeinheit (4) am freien Ende des säulenartigen Gehäuses (3) angeordnet ist.

11. Verbindungsstück (7) zur Verwendung in einer Wägevorrichtung mit einem Gehäuse (1), einer ersten Anzeigeeinheit (4) und einer zweiten Anzeigeeinheit (6), wobei die erste Anzeigeeinheit (4) mechanisch mit dem Gehäuse (1) verbunden ist, **dadurch gekennzeichnet, dass** das Verbindungsstück (7) zwei parallel zueinander ausgerichtete Schwenkachsen (A, A') aufweist und die erste mit der zweiten Anzeigeeinheit (4, 6) verbindet, so dass der vertikale Abstand und/oder der Neigungswinkel der zweiten Anzeigeeinheit (6) unabhängig von der ersten Anzeigeeinheit (4) in Relation zum Gehäuse (1) einstellbar ist.

12. Verbindungsstück nach Anspruch 11, **dadurch gekennzeichnet, dass** das Verbindungsstück (50) mindestens zwei parallel zueinander angeordnete rohrförmige Lagerbolzen (51, 52) als Schwenkachsen (A, A') und mindestens ein Zwischenstück (53) aufweist, wobei das Zwischenstück (53) die n Lagerbolzen (51, 52) miteinander verbindet.

13. Verbindungsstück nach Anspruch 11 oder 12, **dadurch gekennzeichnet, dass** dieses ein Verstellelement (9, 511), ein Feststellelement (358, 463) und/oder ein Sicherungselement (360, 460) für mindestens eine der Schwenkachse aufweist.
